# FASCICULE DE BREVET EUROPEEN

(11) **EP 3 996 853 B1**
(45) Date de publication et mention de la délivrance du brevet: **02.08.2023**
(21) Numéro de dépôt: 20739360.4
(22) Date de dépôt: 10.07.2020
(51) Int. Cl.: B05B 12/14

(54) **INSTALLATION DE PROJECTION DE FLUIDE**
FLÜSSIGKEITSSPRITZANLAGE
INSTALLATION FOR SPRAYING FLUID

(30) Priorité: 12.07.2019 FR 1907881
(43) Date de publication de la demande: 18.05.2022
(73) Titulaire: Exel Industries, 51200 Epernay (FR)
(72) Inventeur: FOURY, Philippe, 75009 Paris (FR); TARANTINI, Joseph, 75009 Paris (FR); FAURE, Didier, 75009 Paris (FR)
(74) Mandataire: Lavoix
(86) Numéro de dépôt international: PCT/EP2020/069559
(87) Numéro de publication internationale: WO 2021/009046

(56) Documents cités:
- EP-A1- 1 380 350
- EP-A1- 3 639 929
- EP-A1- 3 639 930
- WO-A1-2007/137745
- WO-A1-2016/185136
- WO-A1-2020/079212

## Description

La présente invention concerne une installation de projection de fluide.

WO 2016/185136A1 décrit une installation pour appliquer de la peinture sur un véhicule à moteur, qui inclut notamment un système pour stocker et mettre des racleurs en circulation.

Des installations de projection de fluide utilisent fréquemment des racleurs pour nettoyer l'intérieur des conduits dans lesquels le fluide circule. Ces racleurs sont des dispositifs qui repoussent devant eux le fluide présent dans le conduit, de manière à ce qu'après le passage du racleur la quantité de fluide restant dans le conduit soit minimale. Ainsi, si la nature du fluide change, par exemple si des fluides différents tels que des peintures de couleurs différentes doivent être projetés successivement, le risque que le fluide projeté en dernier soit contaminé par des résidus du fluide projeté précédemment est limité.

Lorsqu'ils ne sont pas utilisés, les racleurs sont en général stockés dans une portion dédiée du circuit de circulation du fluide, en général formée par une enveloppe rigide délimitant un volume de stockage du racleur. Lorsque le racleur doit être utilisé, un actionneur dédié pousse le racleur pour le faire pénétrer dans une portion du circuit dans laquelle un fluide de propulsion est injecté. L'action du fluide sur le racleur entraîne alors celui-ci dans le circuit, de manière à ce que le racleur circule dans le circuit en repoussant devant lui les résidus de fluide présents sur les parois du circuit.

Cependant, la présence de cet actionneur génère une fragilité locale dans l'enveloppe, puisque l'actionneur, situé à l'extérieur de celle-ci, doit la traverser pour pousser le racleur. L'enveloppe présente donc au moins une ouverture prévue pour le passage de cet actionneur, ce qui génère un risque de fuite en cas d'usure de l'actionneur, de choc sur celui-ci ou de surpression dans le circuit.

Il existe donc un besoin pour une installation de projection de fluide qui présente moins de risques de fuite que les installations de l'état de la technique, tout en conservant un risque limité de contamination du fluide par des résidus présents dans le circuit.

A cet effet, il est proposé une installation de projection de fluide comprenant un conduit de circulation de fluide, un racleur apte à circuler dans le conduit et une enveloppe délimitant un volume de stockage prévu pour accueillir le racleur dans une position de stockage du racleur, le racleur étant configuré pour repousser devant lui du fluide présent dans le conduit lorsque le racleur circule dans le conduit, le volume de stockage étant en communication fluide avec le conduit et étant configuré pour permettre au racleur de circuler entre le volume de stockage et le conduit, le racleur comportant un premier aimant et l'enveloppe comprend un deuxième aimant apte à exercer sur le premier aimant une première force tendant à déplacer le racleur depuis le volume de stockage jusqu'au conduit.

Selon des modes de réalisation particuliers, l'installation comporte une ou plusieurs des caractéristiques suivantes, prise(s) isolément ou selon toutes les combinaisons techniquement possibles :
- le premier aimant est un aimant permanent ;
- le deuxième aimant est un aimant permanent ;
- le deuxième aimant est un électro-aimant ;
- le deuxième aimant est apte à exercer la première force lorsque le deuxième aimant est alimenté avec un courant électrique présentant un premier sens, et apte à exercer une deuxième force tendant à maintenir le racleur dans le volume de stockage, notamment tendant à rapprocher le racleur du deuxième aimant, lorsque le deuxième aimant est alimenté avec un courant électrique présentant un deuxième sens opposé au premier sens ;
- l'enveloppe délimite une ouverture prévue pour être traversée par le racleur lorsque le racleur circule depuis le volume de stockage jusqu'au conduit, le racleur étant interposé entre le deuxième aimant et l'ouverture lorsque le racleur est accueilli dans le volume de stockage, la première force étant notamment une force tendant à éloigner le premier aimant du deuxième aimant ;
- le deuxième aimant est en appui contre une surface externe de l'enveloppe ;
- l'enveloppe délimite une première ouverture reliant le volume de stockage au conduit et une deuxième ouverture débouchant dans le volume de stockage, le volume de stockage étant interposé entre les deux ouvertures, l'installation comportant en outre des moyens d'injection de fluide dans l'enveloppe à travers la deuxième ouverture, le deuxième aimant étant accueilli dans un volume interne de l'enveloppe et étant interposé entre la deuxième ouverture et le volume de stockage, l'enveloppe délimitant en outre au moins un passage configuré pour conduire le fluide injecté depuis la deuxième ouverture jusqu'à la première ouverture lorsque le racleur est dans la position de stockage ;
- le deuxième aimant est configuré pour exercer sur le premier aimant une force comprise entre 1,5 newton et 5 newtons ; et
- l'installation comporte un actionneur configuré pour déplacer un pion entre une première position dans laquelle le pion fait obstacle à un déplacement du racleur depuis sa position de stockage jusqu'au conduit et une deuxième position dans laquelle le pion permet le passage du racleur depuis la position de stockage jusqu'au conduit.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un premier exemple d'installation de projection de fluide comprenant un conduit de circulation de fluide, un racleur et un volume de stockage du racleur,
[Fig 2] la figure 2 est une représentation schématique partielle en coupe du racleur,
[Fig 3] la figure 3 est une représentation schématique partielle en coupe du volume de stockage du racleur et d'une enveloppe délimitant ce volume de stockage,
[Fig 4] la figure 4 est une représentation en coupe du volume de stockage et de l'enveloppe d'un autre exemple d'installation de projection de fluide, et
[Fig 5] la figure 5 est une vue en coupe d'un mode de réalisation de l'installation de la figure 4.

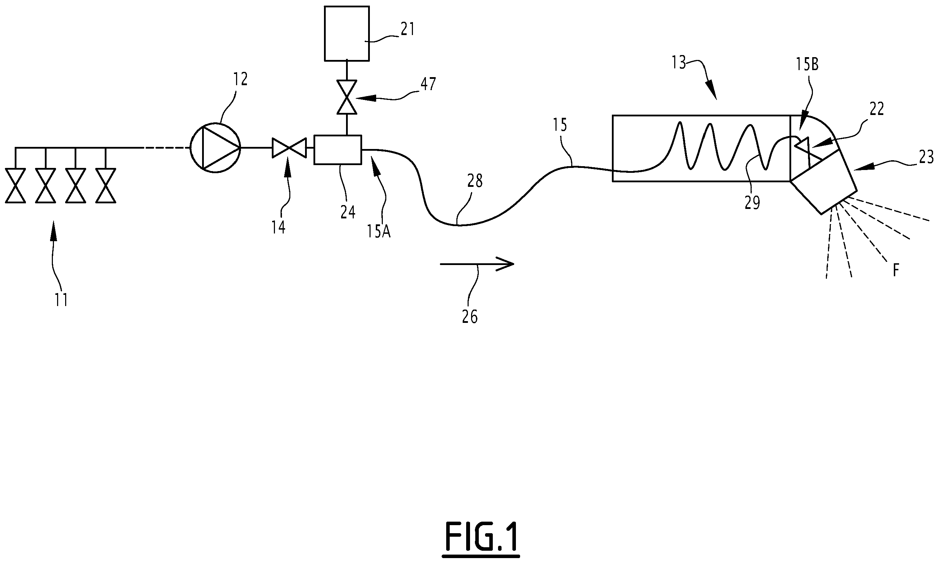

Un premier exemple d'installation de projection de fluide 10 est représenté sur la figure 1.

L'installation 10 est configurée pour projeter un premier fluide F.

L'installation 10 comprend, par exemple, un bloc changeur de teintes 11, une pompe 12 et un organe 13 de projection du premier fluide F tel qu'un pistolet à peinture ou encore un pulvérisateur.

L'installation 10 comporte, en outre, un conduit 15 de circulation de fluide F, un racleur 20, au moins un injecteur 21 et une enveloppe 24.

Le bloc changeur de teintes 11, la pompe 12, le conduit de circulation 15, l'enveloppe 24 et l'organe de projection 13 forment conjointement un circuit de circulation du premier fluide F. Le circuit est notamment propre à conduire le premier fluide F depuis le bloc changeur de teintes 11 jusqu'à l'organe de projection 13.

Le premier fluide F est, par exemple, un liquide, tel qu'une peinture ou un autre produit de revêtement.

Selon un mode de réalisation, le premier fluide F comporte un ensemble de particules électriquement conductrices, notamment de particules métalliques, telles que des particules d'aluminium.

Le bloc changeur de teintes 11 est configuré pour alimenter la pompe 12 avec le premier fluide F. En particulier, le bloc changeur de teintes 11 est configuré pour alimenter la pompe 12 avec une pluralité de premiers fluides F, et pour commuter l'alimentation de la pompe 12 d'un premier fluide F à un autre premier fluide F.

En particulier, chacun des premiers fluides F avec lequel le bloc changeur de teintes 11 est propre à alimenter la pompe 12 est, par exemple, une peinture présentant une teinte différente des teintes des autres premiers fluides F.

La pompe 12 est propre à injecter dans le conduit de circulation 15 un débit du premier fluide F reçu du bloc changeur de teintes 11. Par exemple, la pompe 12 est reliée au conduit de circulation 15 par une vanne 14. En particulier, la pompe 12 est reliée au conduit de circulation 15 à travers l'enveloppe 24.

La pompe 12 est, par exemple, une pompe à engrenage.

L'organe de projection 13 est propre à recevoir le premier fluide F et à projeter le premier fluide F.

Par exemple, l'organe de projection 13 comporte une vanne 22 et une tête de pulvérisateur 23.

L'organe de projection 13 est, par exemple, monté sur un bras mobile propre à orienter l'organe de projection 13 en direction d'un objet sur lequel le premier fluide F doit être projeté.

La vanne 22 est configurée pour relier le conduit de circulation 15 à la tête de pulvérisateur 23, et pour commuter entre une configuration ouverte permettant le passage de premier fluide F du conduit de circulation 15 à la tête de pulvérisateur 23 et une configuration fermée empêchant ce passage.

La tête de pulvérisateur 23 est configurée pour projeter le premier fluide F reçu de la vanne 22.

Le conduit de circulation de fluide 15 est configuré pour conduire le premier fluide F reçu de la vanne 14 jusqu'à l'organe de projection 13.

Le conduit de circulation de fluide 15 est cylindrique. Par exemple, le conduit de circulation de fluide 15 présente une section circulaire et s'étend selon un premier axe A1.

Selon un mode de réalisation, le conduit de circulation de fluide 15 est rectiligne. En variante, le conduit de circulation de fluide 15 est un conduit courbe pour lequel le premier axe A1 est défini localement en tout point du conduit de circulation de fluide 15 comme étant perpendiculaire à un plan dans lequel la section du conduit de circulation de fluide 15 est circulaire.

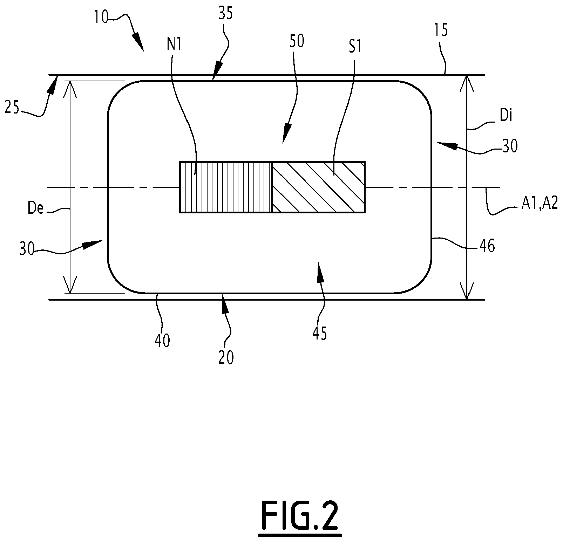

Le conduit de circulation de fluide 15 présente une surface interne 25, représentée sur la figure 2, délimitant une lumière du conduit de circulation de fluide 15 dans un plan perpendiculaire au premier axe A1.

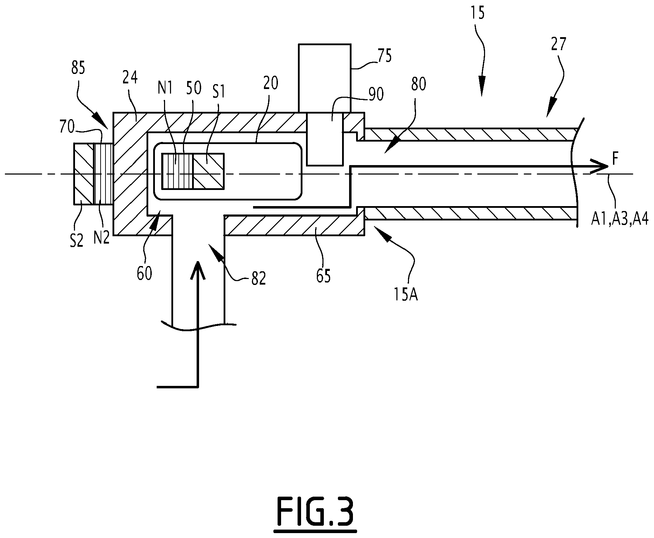

Le conduit de circulation de fluide 15 présente, en outre, une surface externe 27, qui est visible sur la figure 3.

Il est défini un amont et un aval pour le conduit de circulation 15. L'amont et l'aval sont définis en ce que, lors de la projection du premier fluide F, le premier fluide F circule dans le conduit de circulation 15 depuis l'amont vers l'aval.

Par exemple, la pompe est configurée pour injecter le premier fluide F à une extrémité amont 15A du conduit de circulation 15 alors qu'une extrémité aval 15B du conduit de circulation 15 est connectée au pulvérisateur pour permettre au premier fluide F de circuler de l'amont vers l'aval depuis la pompe jusqu'au pulvérisateur à travers le conduit de circulation 15. Cela est représenté sur la figure 1 par une flèche 26.

Selon l'exemple représenté sur la figure 1, le conduit de circulation de fluide 15 comporte une première portion 28 et une deuxième portion 29.

Le conduit de circulation 15 présente une longueur supérieure ou égale à 50 centimètres, par exemple supérieure ou égale à un mètre. Selon un mode de réalisation, chacune de la première portion 28 et de la deuxième portion 29 présente une longueur supérieure ou égale à un mètre.

La première portion 28 est disposée en amont de la deuxième portion 29.

La première portion 28 est, par exemple, configurée pour se déformer de manière à suivre le déplacement de l'organe de projection 13.

La deuxième portion 29 est, par exemple, accueillie dans l'organe de projection 13 et mobile avec lui.

La deuxième portion 29 est, par exemple, hélicoïdale.

Un diamètre interne Di est défini pour le conduit de circulation de fluide 15. Le diamètre interne Di est mesuré dans un plan perpendiculaire au premier axe A1 entre deux points diamétralement opposés de la surface interne 25.

Le diamètre interne Di est, par exemple, compris entre 3,8 et 6,2 mm. Il est à noter que le diamètre interne Di du conduit de circulation 15 est susceptible de varier.

Le conduit de circulation de fluide 15 est, par exemple, réalisé en un matériau métallique. En variante, le conduit de circulation de fluide 15 est réalisé en un matériau polymère.

Le racleur 20 est configuré pour circuler dans le conduit de circulation de fluide 15 afin de repousser devant lui le premier fluide F présent sur la surface interne 25 lors de son déplacement dans le conduit de circulation de fluide 15. En particulier, le racleur 20 est configuré pour nettoyer la surface interne 25, c'est-à-dire pour laisser derrière lui une surface interne 25 couverte d'une quantité de premier fluide F inférieure à la quantité couvrant la surface interne 25 avant le passage du racleur 20, par exemple pour retirer l'intégralité du premier fluide F couvrant la surface interne 25 des portions du conduit 15 dans lesquelles le racleur 20 circule.

Il est entendu par « repousser devant lui » que le racleur 20, circulant selon une direction dans le conduit de circulation de fluide 15, impose un mouvement selon cette direction à du premier fluide F qui est reçu dans la portion du conduit 15 en direction de laquelle le racleur 20 se déplace. Par exemple, un racleur 20 se déplaçant de l'amont vers l'aval impose au premier fluide F situé en aval du racleur 20 un mouvement vers l'aval.

Le racleur 20 s'étend selon un deuxième axe A2.

Le racleur 20 comporte au moins une portion présentant une section circulaire dans un plan perpendiculaire au deuxième axe A2.

Selon l'exemple de la figure 2, le racleur 20 est sensiblement cylindrique et présente une symétrie de révolution autour du deuxième axe A2.

Le racleur 20 est prévu pour circuler dans le conduit de circulation 15 lorsque le racleur 20 est reçu dans la lumière du conduit de circulation 15 et que le premier axe A1 est confondu avec le deuxième axe A2, comme représenté sur la figure 2.

Le racleur 20 présente un diamètre externe De. Le diamètre externe De est le diamètre externe de la portion du racleur 20 présentant le diamètre externe le plus grand dans un plan perpendiculaire au deuxième axe A2.

Le diamètre externe est, par exemple, égal au diamètre interne Di du conduit de circulation 15. En variante, le diamètre externe De est strictement inférieur au diamètre interne Di du conduit de circulation 15.

Le racleur 20 présente deux faces d'extrémité 30 délimitant le racleur 20 selon le deuxième axe A2. Une longueur du racleur 20, mesurée selon le deuxième axe A2 entre les deux faces d'extrémité 30, est comprise, par exemple, entre le diamètre interne Di du conduit de circulation 15 et le double du diamètre interne Di.

Le racleur 20 présente, en outre, une face latérale 35 délimitant le racleur 20 dans un plan perpendiculaire au deuxième axe A2. Lorsque le racleur 20 est sensiblement cylindrique, le diamètre externe est mesuré entre deux points diamétralement opposés de la face latérale 35.

Le racleur 20 comporte, par exemple, une coque 40 délimitant une chambre 45. Dans ce cas, les faces d'extrémité 30 et la face latérale 35 sont des faces externes de la coque 40. En particulier, la coque 40 comporte deux parois d'extrémité 46 qui séparent, selon le deuxième axe A2, la chambre 45 de l'extérieur de la coque 40. Dans ce cas, les faces d'extrémité 30 sont des faces des parois d'extrémité 46.

Les parois d'extrémité 46 sont, par exemple, des parois planes perpendiculaires au deuxième axe A2.

La coque 40 est, par exemple, réalisée en polytétrafluoroéthylène (PTFE), en Polyéthylène, en une polyoléfine, en polyétheréthercétone (PEEK), en polyoxyméthylène (POM), ou encore en Polyamide.

En variante, le racleur 20 est plein, c'est-à-dire qu'aucune chambre 45 n'est délimitée par la coque 40. Dans ce cas le racleur 20 sera réalisé en matériaux présentant de bonnes propriétés élastiques tel qu'un élastomère, notamment un élastomère perfluoré, résistant aux solvants.

Le racleur 20 comporte un aimant 50.

L'aimant 50 est solidaire du racleur 20. L'aimant 50 est, par exemple, accueilli dans la chambre 45.

L'aimant 50 est, par exemple, un aimant permanent, tel qu'un aimant au néodyme.

Cependant, des modes de réalisation dans lesquels l'aimant 50 est un électro-aimant sont également envisageables.

L'aimant 50 présente un pôle nord N1 et un pôle sud S1. Les pôles nord N1 et sud S1 de l'aimant 50 sont, par exemple, alignés selon le deuxième axe A2.

Sur les figures 2 et 3, les pôles nord et sud de chaque aimant sont indiqués schématiquement par, respectivement, une moitié rayée verticalement et une moitié rayée diagonalement de l'aimant considéré.

L'aimant 50 est, notamment, apte à exercer une force magnétique supérieure ou égale à 1 newton (N), par exemple comprise entre 1,5 N et 5 N.

L'injecteur 21 est configuré pour injecter un deuxième fluide dans le circuit, notamment dans le conduit de circulation 15. Par exemple, l'injecteur 21 est configuré pour injecter dans le conduit de circulation 15 un flux de deuxième fluide présentant un débit contrôlable par l'injecteur 21.

En particulier, l'injecteur est configuré pour injecter le deuxième fluide dans le conduit de circulation 15 via l'enveloppe 24. En d'autres termes, l'enveloppe 24 est configurée pour recevoir le deuxième fluide de l'injecteur 21 et pour transmettre le deuxième fluide reçu au conduit de circulation 15, notamment à l'extrémité amont 15A.

Selon l'exemple de la figure 1, l'injecteur 21 est relié par une vanne 47 à l'enveloppe 24.

Le deuxième fluide est, par exemple, un fluide distinct du premier fluide F à projeter. Par exemple, le deuxième fluide est un liquide, parfois appelé « liquide de nettoyage ». Le liquide est, en particulier un solvant propre à dissoudre ou à diluer le premier fluide F. Par exemple, lorsque le premier fluide F est une peinture à base aqueuse, le liquide est de l'eau. Il est à noter que le type de solvant utilisé est susceptible de varier, notamment en fonction de la nature du premier fluide F.

Il est également à noter que d'autres liquides que des solvants sont susceptibles d'être utilisés en tant que deuxième fluide.

En variante, le deuxième fluide est un premier fluide F destiné à être projeté postérieurement au premier fluide F présent dans le conduit de circulation 15, par exemple un premier fluide F présentant une teinte différente du premier fluide F présent dans le conduit de circulation 15. Selon une autre variante, le deuxième fluide est un gaz tel que de l'air comprimé.

De nombreux types d'injecteur 21 sont susceptibles d'être utilisés dans l'installation 10, en fonction du deuxième fluide à injecter. Par exemple, l'injecteur 21 est une pompe à engrenage, ou encore un compresseur propre à générer un flux de gaz.

Il est à noter que, bien que l'injecteur 21 soit décrit précédemment comme étant un dispositif distinct de la pompe 12, il est envisageable que le rôle de l'injecteur 21 soit rempli par la pompe 12, par exemple si le bloc changeur de teintes 11 comprend un réservoir de deuxième fluide que la pompe 12 est alors apte à injecter dans le conduit 15 via l'enveloppe 24.

L'enveloppe 24, également appelée « gare », délimite un volume interne 60, ce volume 60 étant appelé par la suite « volume de stockage du racleur 20 ».

Par exemple, l'installation 10 comporte deux telles enveloppes 24, chacune étant disposée à une extrémité amont 15A, ou aval 15B du conduit de circulation 15.

L'enveloppe 24 est, par exemple, réalisée en une matière plastique, notamment en polyoxyméthylène. En variante, l'enveloppe 24 est réalisée en un matériau métallique amagnétique, notamment en un acier inoxydable tel que l'inox 303.

Chaque enveloppe 24 comprend, par exemple, un bloc 65 creux et délimitant le volume de stockage 60. Le bloc 65 est, par exemple, monolithique.

En variante, le bloc 65 est remplacé par un boîtier composé de plusieurs pièces fixées les unes aux autres. Selon une autre variante, le bloc 65 est remplacé par une portion du conduit de circulation 15 qui délimite le volume de stockage.

Il est à noter que le bloc 65 ou le boîtier sont susceptibles d'être réalisés en un grand nombre de matériaux distincts.

L'enveloppe 24 comporte, en outre, un aimant 70 et, optionnellement, un actionneur 75.

Il est entendu par « volume de stockage » 60 un volume prévu pour accueillir le racleur 20 lorsque le racleur 20 n'est pas en train de circuler dans le conduit 15. En particulier, l'installation 10 comporte des moyens pour maintenir le racleur 20 dans une position de stockage dans laquelle le racleur 20 est accueilli dans le volume de stockage 60.

Le volume de stockage 60 est configuré pour que, lorsque le racleur 20 est dans la position de stockage, le racleur 20 permet la circulation du fluide F depuis l'extrémité amont 15A jusqu'à l'extrémité aval 15B du conduit 15.

Le volume de stockage 60 est, par exemple, cylindrique et s'étend le long d'un quatrième axe A4. Toutefois, la forme du volume de stockage 60 est susceptible de varier.

Le volume de stockage 60 est, notamment, prévu pour permettre au fluide F de circuler autour du racleur 20 lorsque le racleur 20 est dans la position de stockage. Par exemple, le volume de stockage 60 présente un diamètre strictement supérieur au diamètre externe du racleur 20 lorsque le racleur 20 est dans la position de stockage.

En variante, lorsque le racleur 20 est dans la position de stockage, le racleur 20 est disposé à l'extérieur d'un chemin fluide reliant l'extrémité amont 15A à l'injecteur 21.

Le volume de stockage 60 est en communication fluide avec le conduit 15. En d'autres termes, le volume de stockage 60 est tel qu'il permet au fluide F de circuler du volume de stockage au conduit 15 et vice-versa.

Par exemple, le volume de stockage 60 débouche dans le conduit 15, notamment dans l'extrémité amont 15A ou dans l'extrémité aval 15B, via une ouverture 80 ménagée dans l'enveloppe 24.

En outre, le volume de stockage 60 est configuré pour permettre au racleur 20 de circuler entre le volume de stockage 60 et le conduit 15. L'ouverture 80 est, notamment, prévue pour être traversée par le racleur 20 lorsque le racleur 20 circule depuis le volume de stockage 60 jusqu'au conduit de circulation 15, et vice-versa. Dans ce cas, l'ouverture 80 relie le volume de stockage 60 à l'extrémité amont 15A. En particulier, l'ouverture 80 présente un diamètre supérieur ou égal au diamètre externe De du racleur 20.

Selon l'exemple représenté sur la figure 3, le quatrième axe A4 est confondu avec le premier axe A1. Dans ce cas, l'ouverture 80 délimite le volume de stockage 60 selon le quatrième axe A4.

Selon l'exemple représenté sur la figure 1, l'injecteur 21 est par exemple configuré pour injecter le deuxième fluide à travers une ouverture 82 ménagée dans une paroi latérale de l'enveloppe 24, c'est-à-dire une paroi délimitant le volume de stockage 60 dans un plan perpendiculaire au quatrième axe A4.

Toutefois, selon des variantes envisageables, l'injecteur 21 est configuré pour injecter le deuxième fluide à travers une ouverture 82 ménagée dans une paroi longitudinale de l'enveloppe 24, c'est-à-dire une paroi délimitant le volume de stockage 60 selon le quatrième axe A4. Par exemple, le volume de stockage 60 est interposé selon le quatrième axe A4 et/ ou selon le premier axe A1 entre les ouvertures 80 et 82.

Il est à noter que, bien qu'une seule ouverture 82 soit représentée sur la figure 3, le nombre d'ouvertures 82 est susceptible de varier.

L'aimant 70 est, par exemple, un aimant permanent. Par exemple, l'aimant 70 est un aimant au néodyme.

L'aimant 70 est, par exemple, en appui contre une face externe 85 de l'enveloppe 24. En particulier, la face externe 85 est une face du bloc 65 délimitant l'enveloppe selon le quatrième axe A4, notamment à l'opposé de l'ouverture 80.

En variante, l'aimant 70 est intégré dans le bloc 65 de telle sorte que l'aimant 70 est au moins partiellement interposé entre le volume de stockage 60 et la face externe 85 de l'enveloppe 24, ou encore accueilli dans le volume de stockage 60, en appui contre la portion du bloc 65 qui est délimitée selon le quatrième axe A4 par le volume de stockage 60 et par la face externe 85.

Le racleur 20 est interposé entre l'aimant 70 et l'ouverture 80 lorsque le racleur 20 est dans la position de stockage.

L'aimant 70 présente un pôle nord N2 et un pôle sud S2.

L'aimant 70 est configuré pour exercer sur l'aimant 50 une première force tendant à déplacer le racleur 20 depuis le volume de stockage 60 jusqu'au conduit 15. Par exemple, la première force est une force tendant à déplacer le racleur 20 depuis le volume de stockage 60 jusqu'au conduit de circulation 15 à travers l'ouverture 80.

En particulier, la première force est une force tendant à éloigner l'aimant 50 de l'aimant 70.

Par exemple, le pôle nord N2 de l'aimant 70 est dirigé vers le racleur 20 lorsque le racleur 20 est dans la position de stockage, le pôle nord N1 étant dirigé vers l'aimant 70 lorsque le racleur 20 est dans la position de stockage. En d'autres termes, les pôles nord N1 et N2 sont interposés entre les pôles sur S1 et S2, selon le quatrième axe A4, lorsque le racleur 20 est dans la position de stockage.

Dans ce cas, le pôle nord N2 est, par exemple, interposé entre le pôle sud S2 de l'aimant 70 et le racleur 20, le pôle nord N1 étant interposé entre le pôle sud S1 et l'aimant 70 lorsque le racleur 20 est dans la position de stockage.

Il est à noter que, selon une variante, les pôles nord et sud N1 et S1 de l'aimant 50 sont intervertis spatialement, de même que les pôles nord et sud N2 et S2 de l'aimant 70.

L'aimant 70 est, notamment, apte à générer une force magnétique supérieure ou égale à la force magnétique générée par l'aimant 50. En particulier, l'aimant 70 est configuré pour exercer sur l'aimant 50 une force supérieure ou égale à 1 N, notamment comprise entre 1,5 N et 5 N, lorsque le racleur 20 est dans la position de stockage.

Lorsque le racleur 20 est dans la position de stockage, une distance entre l'aimant 50 et l'aimant 70 est comprise entre 1 millimètre (mm) et 5 mm.

Par exemple, une cloison de l'enveloppe 24 délimitée par la face externe 85 et par le volume de stockage 60 selon l'axe A4 présente une épaisseur comprise entre 0 mm et 5 mm, le racleur 20 étant en appui contre cette cloison lorsque le racleur 20 est dans la position de stockage.

L'actionneur 75 est configuré pour exercer sur le racleur 20 une deuxième force tendant à maintenir le racleur 20 dans la position de stockage.

Par exemple, l'actionneur 75 est configuré pour déplacer un pion 90 entre une première position et une deuxième position.

L'actionneur 75 est, par exemple, un vérin hydraulique ou pneumatique, ou encore un moteur électrique.

Le pion 90 est accueilli dans un passage traversant l'enveloppe 24 depuis l'extérieur de l'enveloppe 24 jusqu'au volume de stockage 60.

Lorsque le pion 90 est dans la première position, le pion 90 fait obstacle à un déplacement du racleur 20 depuis le volume de stockage 60 vers le conduit 15. Par exemple, lorsque le pion 90 est dans la première position, le pion 90 fait saillie depuis une face interne de l'enveloppe 24 de manière à obturer partiellement l'ouverture 80.

Lorsque le pion 90 est dans la deuxième position, le pion 90 permet le passage du racleur 20 depuis le volume de stockage 60 vers le conduit 15. Par exemple, le pion 90 est accueilli dans une cavité de l'enveloppe 24, de sorte que le pion 90 ne fait plus saillie à partir de ladite face interne de l'enveloppe 24.

Un premier exemple de procédé de nettoyage de la surface interne 25 du conduit 15 va maintenant être décrit.

Lors d'une étape initiale, du premier fluide F est présent dans la lumière du conduit de circulation 15. Par exemple, le premier fluide F recouvre partiellement la surface interne du conduit de circulation 15.

En outre, le racleur 20 est dans la position de stockage. En particulier, le pion 90 est dans la première position. Ainsi, l'aimant 70 exerce sur le racleur 20 la première force, mais un tel déplacement est empêché par la deuxième force exercée par l'actionneur 75, via le pion 90, sur le racleur 20.

En outre, le premier fluide F est injecté dans le conduit de circulation 15, de telle sorte que le premier fluide F atteint l'extrémité aval 15B pour y être projetée par l'organe de projection 13. En particulier, le premier fluide F est injecté dans le volume de stockage 60 et traverse l'ouverture 80 pour atteindre l'extrémité amont 15A du conduit de circulation 15.

Lors d'une étape d'injection, le racleur 20 est déplacé depuis la position de stockage jusqu'au conduit 15. Par exemple, l'actionneur 75 déplace le pion 90 jusqu'à sa deuxième position, et la première force exercée par l'aimant 70 sur l'aimant 50 déplace alors le racleur 20 depuis la position de stockage jusqu'à l'extrémité amont 15A du conduit 15.

Lors d'une étape de circulation, le racleur 20 circule dans le conduit de circulation 15. En particulier, le racleur 20 est inséré à une extrémité 15A, 15B du conduit de circulation 15 et propulsé jusqu'à l'autre extrémité 15A, 15B du conduit de circulation 15 par un flux de deuxième fluide injecté en amont du racleur 20 dans le conduit de circulation 15, par exemple par un flux de deuxième fluide injecté dans le volume de stockage 60 et traversant l'ouverture 80.

Le flux de deuxième fluide exerce alors sur l'une des faces d'extrémité 30 une troisième force tendant à propulser le racleur dans le conduit de circulation 15 selon le premier axe A1.

Lors de l'étape de circulation 20, le premier axe A1 et le deuxième axe A2 sont confondus.

Sous l'effet du flux de deuxième fluide, le racleur 20 circule dans le conduit de circulation 15. Par exemple, lorsque le flux de deuxième fluide est injecté dans l'extrémité amont 15A du conduit 15, le racleur 20 circule de l'amont vers l'aval. Il est à noter que la direction de circulation du racleur 20 est susceptible de varier, par exemple si le flux de deuxième fluide est injecté dans l'extrémité aval 15B du conduit 15.

Lors de sa circulation, le racleur 20 repousse devant lui le premier fluide F présent dans le conduit de circulation 15, permettant ainsi la récupération du premier fluide F. Par exemple, une vanne de récupération du premier fluide F débouchant dans l'extrémité aval 15B du conduit 15 permet la sortie du premier fluide F repoussé par le racleur 20. En variante, le premier fluide F sort du conduit de circulation par la vanne 22 de l'organe de projection 13.

La surface interne 25 du conduit de circulation 15 est donc nettoyée, puisque le racleur repousse devant lui le premier fluide F présent sur la surface interne 25 du conduit 15.

Lors d'une étape de rangement, le racleur 20 est ramené dans sa position de stockage, par exemple sous l'effet d'un flux de deuxième fluide injecté à l'extrémité aval 15B et exerçant sur le racleur 20 une quatrième force tendant à déplacer le racleur 20 vers l'extrémité amont 15A puis vers la position de stockage. Le racleur 20 est ensuite bloqué dans la position de stockage sous l'action du pion 90, déplacé par l'actionneur 75 depuis la deuxième position jusqu'à la première position.

Grâce à l'aimant 70, le racleur 20 peut être efficacement déplacé depuis sa position de stockage jusqu'au conduit 15 sans qu'il soit nécessaire pour cela de percer une ouverture à cet effet dans l'enveloppe 24 comme c'est le cas dans les installations de l'état de la technique. Puisque le nombre d'ouvertures dans l'enveloppe 24 est réduit, le risque de fuites est réduit.

Un aimant 70 permanent permet une grande simplicité d'utilisation de l'installation 10. L'utilisation de la répulsion entre deux aimants 50 et 70 dont les pôles de même signe sont rapprochés les uns des autres est également très simple.

Lorsque, dans la position de stockage, le racleur 20 est interposé entre l'ouverture 80 et l'aimant 70, le fonctionnement de l'installation est particulièrement simple.

Lorsque l'aimant 70 est en appui contre la face externe de l'enveloppe 24, l'installation 10 est également particulièrement simple à réaliser et à faire fonctionner.

L'actionneur 75 et le pion 90 permettent un maintien en position aisé du racleur 20 dans la position de stockage.

Un deuxième exemple d'installation 10 va maintenant être décrit.

Les éléments identiques au premier exemple ne sont pas décrits à nouveau. Seules les différences sont mises en évidence.

L'aimant 70 est un électro-aimant. En particulier, l'aimant 70 est configuré pour générer un champ magnétique orienté selon le quatrième axe A4.

Par exemple, l'aimant 70 comporte un bobinage formé par un conducteur électrique enroulé autour d'un axe parallèle au ou confondu avec le quatrième axe A4.

L'aimant 70 est configuré pour exercer la première force et la deuxième force sur le racleur 20.

L'installation 10 comporte, en outre, une alimentation électrique propre à alimenter l'aimant 70 avec un courant électrique propre à provoquer la génération, par l'aimant 70, de la première force et/ou de la deuxième force.

Par exemple, l'alimentation électrique est configurée pour alimenter l'aimant 70 avec un premier courant électrique présentant un premier sens de circulation et avec un deuxième courant électrique présentant un deuxième sens de circulation. Les deux sens sont opposés l'un à l'autre.

Par exemple, les deux courants électriques sont des courants électriques présentant chacun une intensité, l'intensité du premier courant étant d'un signe opposé à l'intensité du deuxième courant. Chaque intensité est, notamment, définie comme étant l'intensité du courant correspondant lorsque ce courant circule dans l'électro-aimant 70, notamment dans le bobinage de l'électro-aimant 70.

Les intensités sont, par exemple, égales en valeur absolue. En variante, ces valeurs absolues sont différentes l'une de l'autre.

Lorsque l'électro-aimant 70 est alimenté avec le premier courant, l'électro-aimant exerce la première force.

Lorsque l'électro-aimant 70 est alimenté avec le deuxième courant, l'électro-aimant exerce la deuxième force. La deuxième force est alors une force tendant à rapprocher les aimants 70 et 50 l'un de l'autre.

L'installation 10 est, en outre, dépourvue d'actionneur 75 et de pion 90.

Un deuxième exemple de procédé de nettoyage, mis en oeuvre par le deuxième exemple d'installation 10, va maintenant être décrit. Les éléments identiques au premier exemple de procédé ne sont pas décrits à nouveau. Seules les différences sont mises en évidence.

Lors de l'étape initiale et de l'étape de rangement, l'électro-aimant 70 est alimenté avec le deuxième courant pour attirer le racleur 20 vers l'électro-aimant 70 et ainsi le déplacer vers, ou le maintenir dans, la position de stockage.

Lors de l'étape d'injection, l'électro-aimant 70 est alimenté avec le premier courant et donc déplacé vers le conduit 15.

Ainsi, l'installation 10 est rendue encore moins sujette aux fuites, puisque l'ouverture nécessaire pour le passage du pion 90 n'est plus nécessaire. L'étanchéité de l'enveloppe 24 est alors encore améliorée.

Un troisième exemple d'installation 10 va maintenant être décrit. Les éléments identiques au premier exemple d'installation 10 ne sont pas décrits à nouveau, seules les différences sont mises en évidence.

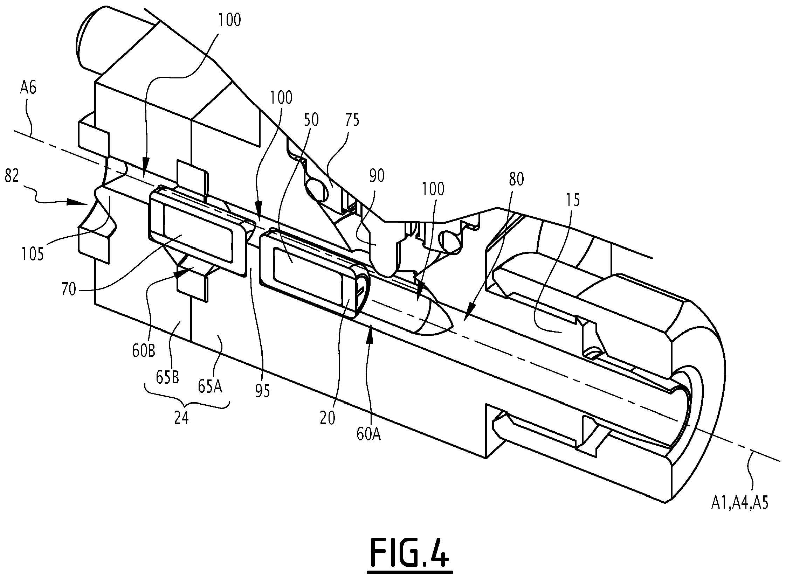

Le troisième exemple est notamment représenté sur la figure 4.

Dans le troisième exemple d'installation 10, l'aimant 70 est accueilli dans l'enveloppe 24. En particulier, l'aimant 70 est accueilli dans le volume de stockage 60.

Par exemple, l'enveloppe 24 comporte au moins deux blocs distincts, notés 65A et 65B sur la figure 4, qui ensemble délimitent au moins partiellement le volume intérieur de l'enveloppe 24.

Le volume intérieur de l'enveloppe 24 comporte le volume de stockage, indiqué par la suite par la référence 60A, et un volume 60B accueillant l'aimant 70, appelé par la suite « volume arrière » 60B .

Le bloc 65A délimite le volume de stockage 60A et l'ouverture 80. Le bloc 65A est interposé entre le conduit de circulation 15 et le bloc 65B.

De plus, le bloc 65A délimite partiellement le volume arrière 60B. En particulier, le bloc 65A délimite le volume arrière 60B au moins selon le premier axe A1.

Le bloc 65A présente, notamment, une saillie 95 s'étendant entre le volume de stockage 60 et le volume arrière 60B de manière à empêcher un déplacement de l'aimant 70 en direction du racleur 20 selon l'axe A1 lorsque le racleur 20 est dans la position de stockage. Par exemple, la saillie 95 sépare le volume de stockage 60A du volume arrière 60B.

La saillie 95 présente une épaisseur comprise par exemple entre 0,5 mm et 4 mm. L'épaisseur de la saillie 95 est mesurée selon le premier axe A1.

Le bloc 65B délimite au moins partiellement le volume arrière 60B. En particulier, le bloc 65B délimite le volume arrière 60B au moins selon le premier axe A1.

Le bloc 65B délimite, en outre, l'ouverture 82.

Le volume de stockage 60A est interposé entre le volume arrière 60B et l'ouverture 80 selon le premier axe A1.

L'ouverture 80 débouche dans le volume de stockage 60A. L'ouverture 80 s'étend selon l'axe A1 de manière à permettre le déplacement du racleur 20 depuis le volume de stockage 60A jusqu'au conduit de circulation 15 à travers l'ouverture 80 par un mouvement de translation selon l'axe A1.

Le volume arrière 60B accueille l'aimant 70. Par exemple, le volume arrière 60B est coaxial au volume de stockage 60A.

En particulier, le volume arrière 60B présente une symétrie de révolution autour du premier axe A1. Le volume arrière 60B comporte, notamment, deux portions extrêmes cylindriques et une portion centrale.

Chaque portion extrême présente, par exemple, un diamètre égal au diamètre du volume de stockage 60A.

La portion centrale est interposée entre les deux portions extrêmes. La portion centrale est, par exemple, délimitée par deux cônes circulaires droits présentant une base commune. La base commune présente un diamètre strictement supérieur au diamètre des portions extrêmes.

La base commune est notamment disposée à l'interface entre les blocs 65A et 65B, de sorte que l'un des cônes est délimité par le bloc 65A et l'autre cône est délimité par le bloc 65B.

Le volume arrière 60B est interposé entre la portion de stockage 60A et l'ouverture 82 selon le premier axe A1.

L'ouverture 82 s'étend selon un cinquième axe A5, ce cinquième axe A5 étant notamment confondu avec l'axe A1.

L'ouverture 82 est, notamment, cylindrique. L'ouverture 82 présente, par exemple, un diamètre compris entre 2 mm et 10 mm. Le diamètre de l'ouverture 82 est, notamment, égal au diamètre de l'ouverture 80 et/ou du conduit de circulation 15.

Le volume interne de l'enveloppe 24 est, en outre, configuré pour permettre le passage de fluide, notamment du deuxième fluide, entre les ouvertures 80 et 82 lorsque le racleur 20 est dans la position de stockage. En particulier, le volume interne comporte, outre les volumes 60A et 60B, au moins un passage 100 s'étendant selon un sixième axe A6 entre une ouverture 82 et l'ouverture 80.

Par exemple, l'enveloppe 24 délimite une pluralité de passages 100 s'étendant chacun depuis l'ouverture 82 jusqu'à l'ouverture 80. En particulier, l'enveloppe 24 délimite trois passages 100.

Il est à noter que, optionnellement, le bloc 65B présente une saillie 105 s'étendant le long de l'axe A5 en direction de l'extérieur du bloc 65, cette saillie 105 étant disposée à l'intérieur de l'ouverture 82. La saillie 105 est, par exemple, sensiblement cônique.

La saillie 105 permet notamment de limiter la quantité de fluide contenu dans l'ouverture 82 et de mieux diriger le flux de fluide vers les passages 100.

Chaque passage 100 s'étend selon un sixième axe A6 correspondant. Le sixième axe A6 est, par exemple, parallèle au premier axe A1.

Chaque passage 100 est, notamment, réalisé par un perçage ou une tranchée s'étendant radialement à partir des volumes 60A, 60B et s'étendant selon le sixième axe A6 correspondant de manière à permettre le passage de fluide à travers le passage 100 depuis l'ouverture 82 jusqu'à l'ouverture 80 lorsque le racleur 20 est dans la position de stockage.

Au moins un passage 100 est, notamment, réalisé par un perçage, par exemple cylindrique, prolongeant l'ouverture 82 jusqu'à l'ouverture 80 ou jusqu'au volume de stockage 60A.

Le diamètre de chaque perçage est, par exemple, compris entre la moitié et les trois quarts du diamètre de l'ouverture 82. En particulier, le diamètre de chaque perçage est supérieur ou égal au double du décalage entre les axes A5 et A6.

Chaque passage 100 s'étend à partir des volumes 60A et 60B selon une direction perpendiculaire à l'axe A1 des volumes 60A, 60B, et communique avec ces volumes 60a, 60B.

Chaque passage 100 présente alors, par exemple, une forme délimitée dans un plan perpendiculaire aux axes A1 et A5 par un cylindre présentant le diamètre du passage 100 et s'étendant selon l'axe A5, duquel ont été exclues le volume délimité par un cylindre présentant le diamètre des volumes 60A, 60B et centré sur l'axe A1.

Ainsi, lorsque le fluide circule selon entre les ouvertures 82 et 80, le fluide longe au moins le racleur 20, par exemple le racleur 20 et l'aimant 70. En particulier, le fluide est en contact avec au moins une partie du racleur 20 et/ou de l'aimant 70.

Il est à noter que d'autres formes de passage 100 sont envisageables. Par exemple, chaque passage 100 présente une section polygonale.

Les passages 100 sont par exemple répartis angulairement autour du premier axe A1, notamment équirépartis comme c'est le cas sur la figure 1. Par exemple, un angle entre les segments reliant deux sixièmes axes A6 consécutifs à l'axe A1 est égal à 120°, quelle que soit la paire d'axes A6 considérée.

Ainsi, le fluide injecté à travers l'ouverture 82 circule autour de l'aimant 70 et du racleur 20 à travers les passages 100.

En particulier, une distance entre chaque sixième axe A6 et l'axe A1 est identique pour tous les axes A6.

Les passages 100 permettent au flux de fluide de circuler entre les ouvertures 80 et 82 selon une direction principalement parallèle à l'axe A1, donc de subir peu de pertes de charge au cours de son mouvement puisque ce mouvement est principalement en ligne droite. Cela permet notamment de faciliter le rinçage de l'installation 10 et notamment du volume de stockage. En particulier, le volume interne 60A, 60B, 100 de l'enveloppe 24 est dépourvu de zones mortes dans lesquelles le fluide pourrait s'accumuler et ne serait pas efficacement rincé.

Il est à noter que des modes de réalisation dans lesquels un unique passage 100 est présent, ou dans lesquels le nombre de passages 100 est différent de trois, sont également envisageables.

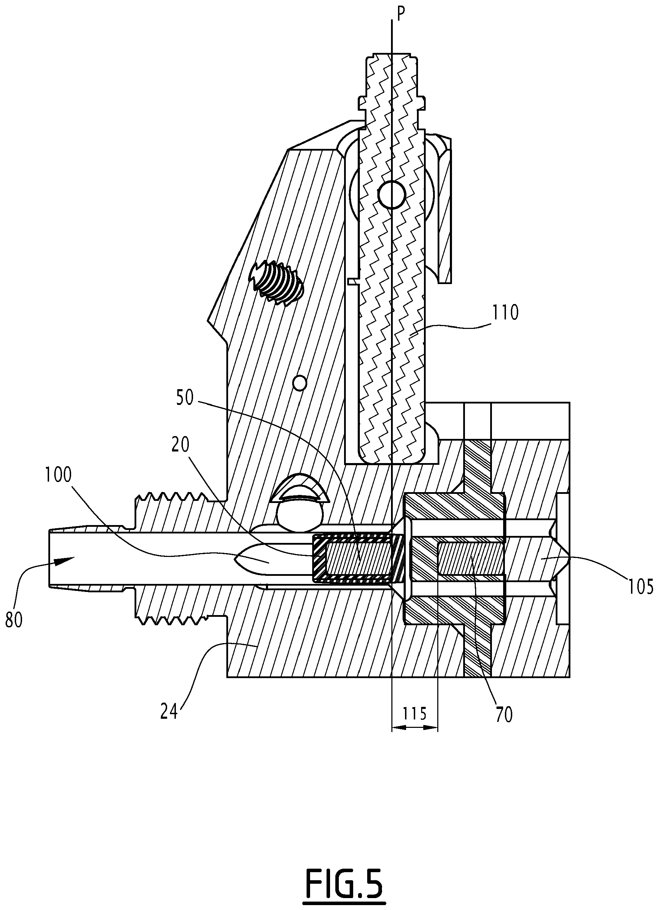

Selon un mode de réalisation représenté sur la figure 5, l'installation 10 comporte un capteur 110 de présence du racleur 20 dans le volume de stockage 60, 60A.

En particulier, le capteur 110 est configuré pour mesurer des valeurs d'un champ magnétique en un point et pour détecter la présence du racleur 20 en fonction des valeurs mesurées.

Par exemple, le capteur 110 est configuré pour comparer les valeurs mesurées à un seuil, notamment pour comparer une valeur absolue des valeurs mesurées audit seuil, et pour détecter la présence du racleur 20 lorsqu'une valeur mesurée ou une valeur absolue est supérieure ou égale au seuil.

Comme il apparaîtra ultérieurement, il est entendu par « mesurer des valeurs d'un champ magnétique » toute mesure d'un paramètre directement corrélé au champ magnétique, même si la valeur du champ magnétique (par exemple en Tesla) n'est pas directement calculée. La mesure d'une résistance électrique, d'une intensité ou d'une tension, fonction du champ magnétique, est un exemple de telle mesure.

Lorsque le capteur 110 détecte une présence du racleur 20 dans le volume de stockage 60, 60A, le capteur 110 génère par exemple un signal électrique à destination d'un autre dispositif tel qu'un module de commande de l'installation 10, ou encore un signal d'alimentation électrique d'une lampe ou d'un émetteur lumineux.

Le point appartient notamment à un plan P interposé selon le quatrième axe A4 entre les deux aimants 50 et 70 lorsque le racleur 20 est dans la position de stockage. Le plan P est perpendiculaire au quatrième axe A4.

Selon un mode de réalisation, lorsque le racleur 20 est dans la position de stockage, les deux aimants 50, 70 sont décalés l'un par rapport à l'autre selon le quatrième axe A4. En particulier, les deux aimants 50, 70 sont au moins partiellement superposables l'un à l'autre par une translation selon le quatrième axe A4.

Lorsque le racleur 20 est dans la position de stockage, le premier aimant 50 et le deuxième aimant 70 délimitent entre eux, selon le quatrième axe A4, une portion d'espace appelée par la suite « espace intermédiaire » 115. L'espace intermédiaire 115 est notamment délimité par une extrémité du premier aimant 50 et par une extrémité du deuxième aimant 70. Il est à noter que l'espace intermédiaire 115 n'est pas nécessairement vide, en particulier l'espace 115 est susceptible de contenir au moins une portion du racleur 20 et une portion de l'enveloppe 24.

Le plan P présente au moins un point en commun avec l'espace intermédiaire 115 et/ou au moins un point en commun avec l'une des extrémités délimitant l'espace intermédiaire 115. Selon l'exemple de la figure 5, le plan P présente un point en commun avec l'extrémité du premier aimant 50 délimitant l'espace intermédiaire 115 lorsque le racleur 20 est dans la position de stockage.

En d'autres termes, le point de mesure du champ magnétique est situé au droit de l'espace intermédiaire 115 entre les deux aimants 50, 70.

Une distance, selon une direction perpendiculaire à l'axe A4, entre le point P et l'aimant 50, 70 le plus proche du point P est, par exemple, comprise entre 5 et 10 mm.

Une distance entre les deux aimants 50, 70, lorsque le racleur 20 est dans la position de stockage, est par exemple comprise entre 2 mm et 10 mm, notamment entre 2 mm et 5 mm. En particulier, la distance est égale à 3,5 mm.

Le capteur 110 est, par exemple, configuré pour mesurer des valeurs d'une composante radiale du champ magnétique, c'est-à-dire d'une composante perpendiculaire au quatrième axe A4. Il est à noter que la mesure d'autres composantes du champ magnétique est également envisageable.

Le capteur 110 comporte, par exemple, un module de mesure configuré pour mesurer les valeurs de champ magnétique et un module de détection configuré pour détecter la présence du racleur 20 à partir des valeurs mesurées.

Le module de mesure est, par exemple, un module de mesure magnétorésistif, dans lequel un élément présente une résistance électrique variable en fonction du champ magnétique. L'intensité du courant traversant l'élément, et /ou la tension électrique aux bornes de l'élément, est alors également corrélée à la valeur du champ magnétique.

En outre, d'autres types de capteurs utilisant des modules de mesure non magnétorésistifs sont également envisageables. Par exemple, selon une variante envisageable, le module de mesure calcule une valeur du champ magnétique en Tesla et transmet la valeur calculée au module de détection. Le module de détection compare alors la valeur calculée à un seuil et détecte la présence du racleur si la valeur calculée est supérieure ou égale au seuil.

Lorsque le module de mesure est un module magnétorésistif, le module de détection compare la valeur de la résistance, l'intensité du courant et/ou la tension à un seuil de résistance, d'intensité ou de tension correspondant, et détecte la présence du racleur 20 en fonction de la comparaison.

Le seuil de résistance, de courant ou de tension est un seuil correspondant au seuil de champ magnétique, c'est-à-dire que lorsque la valeur de champ magnétique est égale au seuil de champ magnétique, la valeur de la résistance est égale au seuil de résistance, la valeur d'intensité est égale au seuil d'intensité ou la valeur de tension est égale au seuil de tension.

Il est à noter que l'intensité, la tension et la résistance peuvent augmenter avec le champ magnétique, ou diminuer lorsque le champ magnétique augmente, en fonction du type de module de mesure utilisé.

Ainsi, selon un mode de réalisation, le module de détection compare la valeur d'intensité, de tension ou de résistance au seuil de résistance, d'intensité ou de tension, respectivement, et détecte la présence du racleur si la valeur de résistance, d'intensité ou de tension est supérieure ou égale au seuil de résistance, d'intensité ou de tension correspondant. Cela est alors équivalent au fait que la valeur de champ magnétique mesurée est supérieure ou égale au seuil de champ magnétique.

Selon un autre mode de réalisation, le module de détection compare la valeur d'intensité, de tension ou de résistance au seuil de résistance, d'intensité ou de tension, respectivement, et détecte la présence du racleur si la valeur de résistance, d'intensité ou de tension est inférieure ou égale au seuil de résistance, d'intensité ou de tension correspondant. Cela est alors équivalent au fait que la valeur de champ magnétique mesurée est supérieure ou égale au seuil de champ magnétique.

Les modules de mesure magnétorésistifs sont connus en soi et utilisés dans de nombreuses applications telles que la lecture de disques durs.

Il est à noter que si le capteur 110 a été décrit ci-dessus comme possédant un module de mesure et un module de détection séparés, des modes de réalisation dans lesquels ces deux modules sont confondus sont également envisageables.

L'utilisation d'un capteur 110 mesurant des valeurs de champ magnétique permet de détecter la présence du racleur 20 sans nécessiter de ménager dans l'enveloppe 24 une ouverture additionnelle pour permettre le passage d'un dispositif de détection mécanique, en tirant parti de la présence du premier aimant 50. Les risques de fuite sont donc réduits.

En outre, l'utilisation de capteurs magnétiques n'est pas incompatible avec le travail dans une atmosphère explosive.

La comparaison des valeurs mesurées à un seuil permet de détecter aisément la présence du racleur 20 avec un minimum de traitement mathématique. Lorsque deux aimants sont disposés proches l'un de l'autre et que leurs pôles de même signe sont dirigés l'un vers l'autre, comme c'est le cas pour les aimants 50, 70, les valeurs de champ magnétique au droit de l'espace 115 entre les aimants 50, 70 augmentent de manière importante même à une distance relativement importante des aimants 50, 70, par rapport aux valeurs mesurées en le même point en présence seulement de l'un des aimants 50, 70. En d'autres termes, les lignes de champ magnétique sont repoussées loin des aimants 50, 70 au droit de l'espace intermédiaire 115.

Lorsque le point de mesure appartient à un plan P interposé entre les deux aimants 50, 70, il est donc possible de détecter la présence du racleur 20 dans le volume de stockage 60, 60A en positionnant le capteur 110 à une distance relativement importante du deuxième aimant 70 et ainsi d'éviter que le capteur 110 ne détecte le premier aimant 70 en l'absence du racleur 20. La détection du racleur 20 est alors plus précise puisque notamment le risque de faux positifs est réduit.

L'invention correspond à toute combinaison techniquement possible des modes de réalisation décrits ci-dessus.

## Revendications

1. Installation (10) de projection de fluide comprenant un conduit (15) de circulation de fluide, un racleur (20) apte à circuler dans le conduit (15) et une enveloppe (24) délimitant un volume de stockage (60, 60A) prévu pour accueillir le racleur (20) dans une position de stockage du racleur (20), le racleur (20) étant configuré pour repousser devant lui du fluide présent dans le conduit (15) lorsque le racleur (20) circule dans le conduit, le volume de stockage (60, 60A) étant en communication fluide avec le conduit (15) et étant configuré pour permettre au racleur (20) de circuler entre le volume de stockage (60) et le conduit (15),
l'installation (10) étant **caractérisée en ce que** le racleur (20) comporte un premier aimant (50) et **en ce que** l'enveloppe (24) comprend un deuxième aimant (70) apte à exercer sur le premier aimant (50) une première force tendant à déplacer le racleur (20) depuis le volume de stockage (60, 60A) jusqu'au conduit (15).

2. Installation selon la revendication 1, dans laquelle le premier aimant (50) est un aimant permanent.

3. Installation selon la revendication 1 ou 2, dans laquelle le deuxième aimant (70) est un aimant permanent.

4. Installation selon la revendication 1 ou 2, dans laquelle le deuxième aimant (70) est un électro-aimant.

5. Installation selon la revendication 4, dans laquelle le deuxième aimant (70) est apte à exercer la première force lorsque le deuxième aimant (70) est alimenté avec un courant électrique présentant un premier sens, et apte à exercer une deuxième force tendant à maintenir le racleur (20) dans le volume de stockage (60, 60A), notamment tendant à rapprocher le racleur (20) du deuxième aimant (70), lorsque le deuxième aimant (70) est alimenté avec un courant électrique présentant un deuxième sens opposé au premier sens.

6. Installation selon l'une quelconque des revendications précédentes, dans laquelle l'enveloppe (24) délimite une ouverture (80) prévue pour être traversée par le racleur (20) lorsque le racleur (20) circule depuis le volume de stockage (60, 60A) jusqu'au conduit (15), le racleur (20) étant interposé entre le deuxième aimant (70) et l'ouverture (80) lorsque le racleur (20) est accueilli dans le volume de stockage (60, 60A), la première force étant notamment une force tendant à éloigner le premier aimant (50) du deuxième aimant (70).

7. Installation selon l'une quelconque des revendications précédentes, dans laquelle le deuxième aimant (70) est en appui contre une surface externe (85) de l'enveloppe (24).

8. Installation selon l'une quelconque des revendications 1 à 6, dans laquelle l'enveloppe (24) délimite une première ouverture (80) reliant le volume de stockage (60A) au conduit (15) et une deuxième ouverture (82) débouchant dans le volume de stockage (60), le volume de stockage (60A) étant interposé entre les deux ouvertures (80, 82), l'installation (10) comportant en outre des moyens (12) d'injection de fluide dans l'enveloppe (24) à travers la deuxième ouverture (82), le deuxième aimant (70) étant accueilli dans un volume interne (60B) de l'enveloppe (24) et étant interposé entre la deuxième ouverture (82) et le volume de stockage (60A), l'enveloppe (24) délimitant en outre au moins un passage (100) configuré pour conduire le fluide injecté depuis la deuxième ouverture (82) jusqu'à la première ouverture (80) lorsque le racleur (20) est dans la position de stockage.

9. Installation selon l'une quelconque des revendications précédentes, dans laquelle le deuxième aimant (70) est configuré pour exercer sur le premier aimant une force comprise entre 1,5 newton et 5 newtons lorsque le racleur (20) est dans la position de stockage.

10. Installation selon l'une quelconque des revendications précédentes, comportant, en outre, un actionneur (75) configuré pour déplacer un pion (90) entre une première position dans laquelle le pion (90) fait obstacle à un déplacement du racleur (20) depuis sa position de stockage jusqu'au conduit (15) et une deuxième position dans laquelle le pion (90) permet le passage du racleur (20) depuis la position de stockage jusqu'au conduit (15).

11. Installation selon l'une quelconque des revendications précédentes, comportant un capteur configuré pour détecter une présence du racleur (20) dans le volume de stockage (60, 60A), le capteur étant configuré pour mesurer des valeurs d'un champ magnétique et pour détecter la présence du racleur (20) en fonction des valeurs de champ magnétique mesurées.

12. Installation selon la revendication 11, dans lequel le capteur est configuré pour comparer une valeur de champ magnétique mesurée à un seuil, et pour détecter la présence du racleur (20) lorsque la valeur mesurée est supérieure ou égale au seuil.

13. Installation selon la revendication 12, dans lequel la première force tend à déplacer le racleur (20) selon une direction parallèle à un axe (A4) du volume de stockage (60, 60A), le premier aimant (50) et le deuxième aimant (70) étant décalés l'un par rapport à l'autre selon ledit axe (A4), le capteur étant configuré pour mesurer les valeurs de champ magnétique en un point, ledit point appartenant à un plan (P) perpendiculaire à l'axe (A4), le plan (P) étant interposé selon l'axe (A4) entre le premier aimant (50) et la deuxième aimant (70).

## Patentansprüche

1. Anlage (10) zur Projektion von Fluid, umfassend eine Leitung (15) für Fluidzirkulation, einen Abstreifer (20), der geeignet ist, um in der Leitung (15) zu zirkulieren, und eine Hülle (24), die ein Speichervolumen (60, 60A) begrenzt, das dazu dient, den Abstreifer (20) in einer Speicherposition des Abstreifers (20) aufzunehmen, wobei der Abstreifer (20) konfiguriert ist, um in der Leitung (15) vorhandenes Fluid vor sich her zu schieben, wenn der Abstreifer (20) in der Leitung zirkuliert, wobei das Speichervolumen (60, 60A) in Fluidverbindung mit der Leitung (15) ist und konfiguriert ist, um dem Abstreifer (20) zu ermöglichen, zwischen dem Speichervolumen (60) und der Leitung (15) zu zirkulieren,
wobei die Anlage (10) **dadurch gekennzeichnet ist, dass** der Abstreifer (20) einen ersten Magneten (50) umfasst und dass die Hülle (24) einen zweiten Magneten (70) aufweist, der geeignet ist, um eine erste Kraft, die dazu neigt, den Abstreifer (20) von dem Speichervolumen (60, 60A) zu der Leitung (15) zu bewegen, auf den ersten Magneten (50) auszuüben.

2. Anlage nach Anspruch 1, wobei der erste Magnet (50) ein Permanentmagnet ist.

3. Anlage nach Anspruch 1 oder 2, wobei der zweite Magnet (70) ein Permanentmagnet ist.

4. Anlage nach Anspruch 1 oder 2, wobei der zweite Magnet (70) ein Elektromagnet ist.

5. Anlage nach Anspruch 4, wobei der zweite Magnet (70) geeignet ist, um die erste Kraft auszuüben, wenn der zweite Magnet (70) mit einem elektrischen Strom versorgt wird, der eine erste Richtung aufweist, und geeignet ist, um eine zweite Kraft auszuüben, die dazu neigt den Abstreifer (20) in dem Speichervolumen (60, 60A) zu halten, insbesondere dazu neigt, den Abstreifer (20) näher an den zweiten Magneten (70) heranzubringen, wenn der zweite Magnet (70) mit einem elektrischen Strom versorgt wird, der eine zweite Richtung entgegen der ersten Richtung aufweist.

6. Anlage nach einem der vorherigen Ansprüche, wobei die Hülle (24) eine Öffnung (80) begrenzt, die bereitgestellt ist, um von dem Abstreifer (20) durchquert zu werden, wenn der Abstreifer (20) von dem Speichervolumen (60, 60A) zu der Leitung (15) strömt, wobei der Abstreifer (20) zwischen den zweiten Magneten (70) und die Öffnung (80) eingefügt ist, wenn der Abstreifer (20) in dem Speichervolumen (60, 60A) aufgenommen ist, wobei die erste Kraft insbesondere eine Kraft ist, die dazu neigt, den ersten Magneten (50) weg von dem zweiten Magneten (70) zu bewegen.

7. Anlage nach einem der vorherigen Ansprüche, wobei der zweite Magnet (70) in Anlage an einer Außenfläche (85) der Hülle (24) ist.

8. Anlage nach einem der Ansprüche 1 bis 6, wobei die Hülle (24) eine erste Öffnung (80), die das Speichervolumen (60A) mit der Leitung (15) verbindet, und eine zweite Öffnung (82), die in das Speichervolumen (60) mündet, begrenzt, wobei das Speichervolumen (60A) zwischen die zwei Öffnungen (80, 82) eingefügt ist, die Anlage (10) ferner umfassend Einrichtungen (12) zum Einspritzen von Fluid durch die zweite Öffnung (82) in die Hülle (24), wobei der zweite Magnet (70) in einem Innenvolumen (60B) der Hülle (24) aufgenommen ist und zwischen die zweite Öffnung (82) und das Speichervolumen (60A) eingefügt ist, wobei die Hülle (24) ferner mindestens einen Durchgang (100) begrenzt, der konfiguriert ist, um das eingespritzte Fluid von der zweiten Öffnung (82) zu der ersten Öffnung (80) zu leiten, wenn der Abstreifer (20) in der Speicherposition ist.

9. Anlage nach einem der vorherigen Ansprüche, wobei der zweite Magnet (70) konfiguriert ist, um eine Kraft zwischen 1,5 Newton und 5 Newton auf den ersten Magneten auszuüben, wenn der Abstreifer (20) in der Speicherposition ist.

10. Anlage nach einem der vorherigen Ansprüche, ferner umfassend einen Aktuator (75), der konfiguriert ist, um einen Stift (90) zwischen einer ersten Position, in der der Stift (90) ein Hindernis für die eine Bewegung des Schabers (20) aus seiner Speicherposition in die Leitung (15) verhindert, und einer zweiten Position, in der der Stift (90) den Durchgang des Schabers (20) aus der Speicherposition in die Leitung (15) zu ermöglichen.

11. Anlage nach einem der vorherigen Ansprüche, umfassend einen Sensor, der konfiguriert ist, um das Vorhandensein des Abstreifers (20) in dem Speichervolumen (60, 60A) zu erfassen, wobei der Sensor konfiguriert ist, um Werte eines Magnetfelds zu messen und das Vorhandensein des Abstreifers (20) abhängig von gemessenen Magnetfeldwerten zu erfassen.

12. Anlage nach Anspruch 11, wobei der Sensor konfiguriert ist, um einen gemessenen Magnetfeldwert mit einem Schwellenwert zu vergleichen und das Vorhandensein des Abstreifers (20) zu erfassen, wenn der gemessene Wert größer als oder gleich wie der Schwellenwert ist.

13. Anlage nach Anspruch 12, wobei die erste Kraft dazu neigt, den Abstreifer (20) in eine Richtung parallel zu einer Achse (A4) des Speichervolumens (60, 60A) zu bewegen, wobei der erste Magnet (50) und der zweite Magnet (70) zueinander entlang der Achse (A4) versetzt sind, wobei der Sensor konfiguriert ist, um die Magnetfeldwerte an einem Punkt zu messen, wobei der Punkt zu einer Ebene (P) senkrecht zu der Achse (A4) gehört, wobei die Ebene (P) entlang der Achse (A4) zwischen den ersten Magneten (50) und den zweiten Magneten (70) eingefügt ist.

## Claims

1. A fluid spraying facility (10) comprising a fluid circulation conduit (15), a scraper (20) adapted to flow in the conduit (15) and an envelope (24) defining a storage volume (60, 60A) adapted to receive the scraper (20) in a storage position of the scraper (20), the scraper (20) being configured to push fluid present in the conduit (15) ahead of the scraper (20), as the scraper (20) flows through the conduit, the storage volume (60, 60A) being in fluid communication with the conduit (15) and being configured to allow the scraper (20) to flow between the storage volume (60) and the conduit (15),
the facility (10) being **characterised in that** the scraper (20) comprises a first magnet (50) and **in that** the envelope (24) comprises a second magnet (70) capable of exerting on the first magnet (50) a first force tending to displace the scraper (20) from the storage volume (60, 60A) to the conduit (15).

2. The facility according to claim 1, wherein the first magnet (50) is a permanent magnet.

3. The facility according to claim 1 or 2, wherein the second magnet (70) is a permanent magnet.

4. The facility according to claim 1 or 2, wherein the second magnet (70) is an electromagnet.

5. The facility according to claim 4, wherein the second magnet (70) is capable of exerting the first force when the second magnet (70) is supplied with an electric current having a first direction, and capable of exerting a second force tending to keep the scraper (20) in the storage volume (60, 60A), in particular tending to bring the scraper (20) closer to the second magnet (70), when the second magnet (70) is supplied with an electric current having a second direction opposite the first direction.

6. The facility according to any one of the preceding claims, wherein the envelope (24) delimits an opening (80) intended to be traversed by the scraper when the scraper is (20) when the scraper (20) is circulating from the storage volume (60, 60A) to the conduit (15), the scraper (20) being interposed between the second magnet (70) and the opening (80) when the scraper (20) is received in the storage volume (60, 60A), the first force being in particular a force tending to move the first magnet (50) away from the second magnet (70).

7. The facility according to any one of the preceding claims, wherein the second magnet (70) bears against an outer surface (85) of the envelope (24).

8. The facility according to any one of the claims 1 to 6, wherein the envelope (24) delimits a first opening (80) connecting the storage volume (60A) to the conduit (15) and a second opening (82) leading into the storage volume (60), the storage volume (60A) being interposed between the two openings (80, 82), the facility (10) further comprising means (12) for injecting fluid into the envelope (24) through the second opening (82), the second magnet (70) being accommodated in an internal volume (60B) of the envelope (24) and being interposed between the second opening (82) and the storage volume (60A), the envelope (24) furthermore delimiting at least one passage (100) configured to conduct the injected fluid from the second opening (82) to the first opening (80) when the scraper (20) is in the storage position.

9. The facility according to any one of the preceding claims, wherein the second magnet (70) is configured to exert on the first magnet a force of between 1.5 newtons and 5 newtons when the scraper (20) is in the storage position.

10. The facility according to any one of the preceding claims, further comprising an actuator (75) configured to move a pin (90) between a first position in which the pin (90) obstructs movement of the scraper (20) from its storage position to the conduit (15) and a second position in which the pin (90) allows the scraper (20) to pass from the storage position to the conduit (15).

11. The facility according to any of the preceding claims, comprising a sensor configured to detect a presence of the scraper (20) in the storage volume (60, 60A), the sensor being configured to measure values of a magnetic field and to detect the presence of the scraper (20) in dependence on the measured magnetic field values.

12. The facility according to claim 11, wherein the sensor is configured to compare a measured magnetic field value to a threshold, and to detect the presence of the scraper (20) when the measured value is greater than or equal to the threshold.

13. The facility according to claim 12, wherein the first force tends to move the scraper (20) in a direction parallel to an axis (A4) of the storage volume (60, 60A), the first magnet (50) and the second magnet (70) being offset from each other along said axis (A4), the sensor being configured to measure the magnetic field values at a point, said point belonging to a plane (P) perpendicular to the axis (A4), the plane (P) being interposed along the axis (A4) between the first magnet (50) and the second magnet (70).
